# FASCICULE DE BREVET EUROPEEN

(11) **EP 2 993 547 B1**
(45) Date de publication et mention de la délivrance du brevet: **02.08.2017**
(21) Numéro de dépôt: 15290226.8
(22) Date de dépôt: 01.09.2015
(51) Int. Cl.: G05D 23/13, E03C 1/05

(54) **ROBINET MITIGEUR À INCRÉMENTATION**
MISCHBATTERIE MIT INKREMENTIERUNG
INCREMENTAL MIXER TAP

(30) Priorité: 03.09.2014 FR 1401959
(43) Date de publication de la demande: 09.03.2016
(73) Titulaire: Valentin SAS, 80210 Feuquières-en-Vimeu (FR)
(72) Inventeur: EMPEREUR, Vincent, 80130 Friville Escarabotin (FR)
(74) Mandataire: Loyer & Abello

(56) Documents cités:
- WO-A1-2010/038201
- WO-A2-2007/082301
- US-A1- 2006 186 215
- US-A1- 2012 266 973

## Description

La présente invention concerne un robinet mitigeur à incrémentation.

Les robinets mitigeurs comprennent un corps comprenant une première chambre alimentée en eau chaude, une seconde chambre alimentée en eau froide et une chambre de mélange en relation avec les première et seconde chambres et dont la température est régulée par une cartouche thermostatique. Ce corps comporte aussi deux organes de commande, l'un pour commander l'ouverture, la fermeture et le débit de l'eau mitigée, et l'autre pour régler la température de l'eau mitigée.

Actuellement, se sont développées des gammes de robinet mitigeur dont le corps est cylindrique d'axe horizontal et dont une extrémité comporte une poignée pour régler le débit d'eau mitigée et l'autre une poignée pour régler la température. Cette dernière est munie d'une butée escamotable généralement actionnée par un poussoir transversal qui limite la rotation de la cartouche thermostatique de sorte que la température de l'eau mitigée n'excède pas 38°C. Si l'utilisateur désire obtenir une eau mitigée de température supérieure à cette dernière, il débloquera cette butée par une pression sur le bouton poussoir afin d'entraîner la rotation de la cartouche thermostatique.

Un exemple d'un tel robinet est décrit dans le document WO-2007/082301-A.

Le réglage de la température d'un robinet mitigeur présente notamment les inconvénients suivants :
- les graduations indiquant la température choisie ne sont ni fiables, ni facilement lisibles ;
- le sens dans lequel faire tourner la poignée pour régler la température n'est pas intelligible dans une grande partie des cas ;
- manoeuvrer cette poignée lorsque les mains sont savonneuses est rarement aisée ;
- l'utilisation du poussoir pour débloquer la rotation de la poignée pour régler la température est inintelligible sans expérience ;
- les températures possibles affichées sont très souvent limitées à 38°C ;
- l'utilisateur ne sait pas le plus souvent dans quel sens faire tourner la poignée réglant la température et de combien de degrés pour obtenir la température souhaitée.

Aussi, un des buts de la présente invention est-il de fournir un robinet mitigeur à incrémentation qui permet de remédier à ces inconvénients pour permettre à l'utilisateur de visualiser la température de l'eau mitigée.

Un autre but de l'invention est de fournir un tel robinet qui permet de régler la température avec une bonne fiabilité.

Un but supplémentaire de l'invention est de fournir un tel robinet qui peut être manoeuvré en toute circonstance.

Ces buts, ainsi que d'autres qui apparaîtront par la suite, sont atteints par un robinet mitigeur à incrémentation du genre comportant notamment un corps cylindrique dans lequel est insérée une cartouche thermostatique, qui est relié, d'une part, à une arrivée d'eau froide et à une arrivée d'eau chaude et, d'autre part, à une sortie d'eau mitigée, et qui comporte une commande pour régler le débit de sortie et une commande pour contrôler la température de l'eau mitigée, lequel robinet est caractérisé, selon la présente invention, par le fait que la commande pour régler la température de l'eau mitigée est reliée à une extrémité de la cartouche thermostatique et comporte un dispositif d'incrémentation comprenant :
- une bague montée en rotation sur l'axe de la cartouche thermostatique et comportant à sa périphérie deux cercles de denture,
- deux doigts pousseurs coopérant chacun avec un cercle de denture afin de faire tourner la bague dans l'un ou l'autre sens, et,
- des moyens pour actionner chaque doigt pousseur.

Avantageusement, le robinet à incrémentation comprend une plaque munie d'un berceau sur lequel le corps cylindrique est maintenu en position par tout moyen connu.

De préférence chaque cercle de denture comporte une butée pour arrêter la rotation de la bague dans chaque sens.

Selon un mode de réalisation préféré, chaque butée est constituée par une portion non dentée sur le cercle de denture correspondant.

Avantageusement chaque doigt pousseur se déplace à l'intérieur d'un, guide ménagé dans la plaque.

De préférence le moyen pour actionner chaque doigt est constitué par un bouton poussoir disposé à une extrémité du doigt pousseur dont l'autre extrémité coopère avec le cercle de denture correspondant.

Avantageusement, la plaque est rendue solidaire d'une contre-plaque au-dessus de laquelle se déplacent les boutons-poussoirs afin d'en permettre l'actionnement par un utilisateur.

De préférence, le robinet à incrémentation comprend aussi un dispositif pour visualiser la température de l'eau mitigée.

Selon un premier mode de réalisation, le dispositif pour visualiser la température de l'eau mitigée comporte une roue engrenée par l'axe de la cartouche thermostatique et sur le pourtour de laquelle est disposée une échelle de température, chaque chiffre s'affichant dans une lucarne ménagée dans la contre-plaque.

Selon un autre mode de réalisation, le dispositif pour visualiser la température de l'eau mitigée comporte une roue engrenée par l'axe de la cartouche thermostatique sur le pourtour de laquelle est disposée une bande d'au moins deux couleurs, chacune figurant une plage de températures.

Dans le mode de réalisation comportant deux bandes, l'une s'élargit au fur et à mesure que la température de l'eau mitigée augmente, et l'autre s'élargit au fur et à mesure que la température diminue.

La description qui va suivre et qui ne présente aucun caractère limitatif, doit être lue en regard des figures annexées, parmi lesquelles :

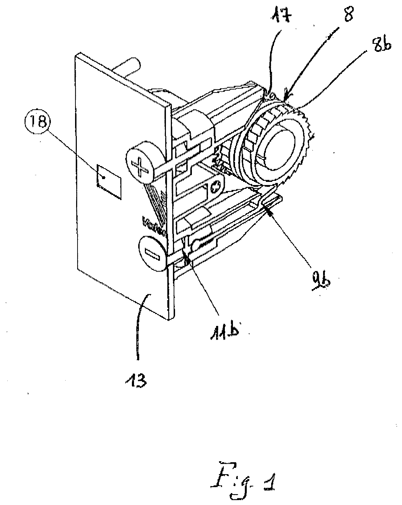

- la figure 1 est une vue en perspective partielle d'un robinet mitigeur à incrémentation selon la présente invention ; et,

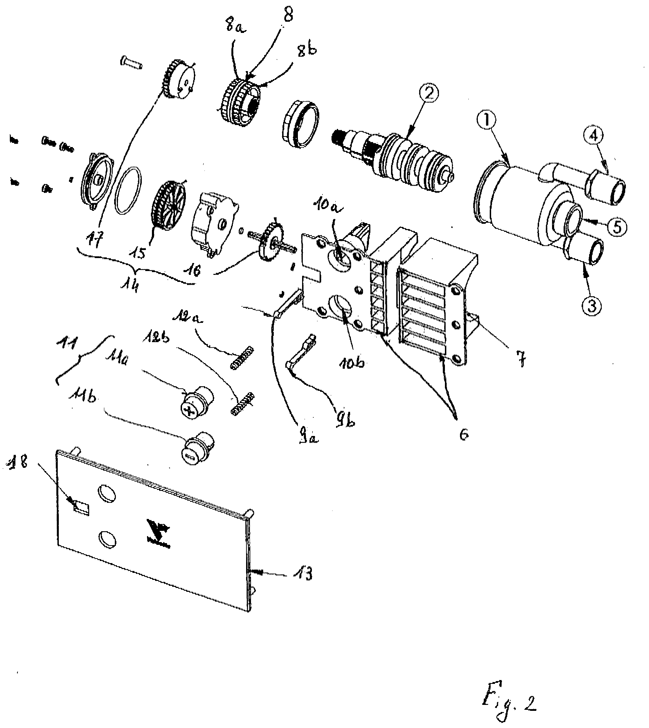

- la figure 2 est, une vue éclatée, du robinet mitigeur à incrémentation selon la figure 1.

Ainsi qu'on peut le voir sur ces figures, un robinet mitigeur à incrémentation du genre comporte notamment un corps cylindrique 1 dans lequel est insérée une cartouche thermostatique 2 et qui est relié, d'une part, à une arrivée d'eau froide 3 et à une arrivée d'eau chaude 4 et, d'autre part, à une sortie d'eau mitigée 5. Il comporte, de façon connue, une commande pour régler le débit de sortie (non représentée sur les figures) et une commande pour contrôler la température de l'eau mitigée (non représentée sur les figures).

Selon la présente invention, la commande pour régler la température de l'eau mitigée est reliée à une extrémité de la cartouche thermostatique 2 et comporte un dispositif d'incrémentation.

Ce robinet à incrémentation comprend une plaque 6 munie d'un berceau 7 sur lequel le corps cylindrique 1 est maintenu en position par tout moyen connu.

Selon le présent exemple de réalisation, le dispositif à incrémentation camprend :
- une bague 8 montée en rotation sur l'axe de la cartouche thermostatique 2 et comportant à sa périphérie deux cercles de denture 8a et 8b,
- deux doigts pousseurs 9a et 9b coopérant chacun avec un cercle de denture, 8a et 8b respectivement afin de faire tourner la bague 8 dans l'un ou l'autre sens, et
- des moyens 11 pour action chaque doigt pousseur 9a et 9b.

Chaque cercle de denture, 8a et 8b, comporte une butée pour arrêter la rotation de la bague 8 dans chaque sens. Selon le présent exemple de réalisation, chaque butée est constituée par une portion non dentée du cercle de denture correspondant.

Chaque doigt pousseur, 9a et 9b, se déplace à l'intérieur d'un guide, 10a et 10b respectivement, ménagé dans la plaque 6.

Quant au moyen pour actionner chaque doigt 9a et 9b, il est constitué par un bouton poussoir, 11a et 11b, disposé à une extrémité du doigt pousseur 9a et 9b correspondant dont l'autre extrémité coopère avec le cercle de denture 8a et 8b correspondant.

Le rappel des boutons-poussoirs 10a et 10b est assuré par des ressorts de rappel 12a et 12b respectivement.

La plaque 8 est rendue solidaire d'une contre-plaque 13 au travers de laquelle se déplacent les boutons-poussoirs 11 a et 11 b afin d'en permettre l'actionnement par un utilisateur.

Selon un mode de réalisation de la présente invention, le robinet à incrémentation comprend aussi un dispositif 14 pour visualiser la température de l'eau mitigée.

Ce dispositif 14 comprend notamment une roue 15 qui comporte un moyen pour indiquer la température et qui est entraînée en rotation par un engrenage 16 piloté par une roue dentée 17, elle-même solidaire de la manoeuvre de la cartouche thermostatique 2.

Selon un premier exemple de réalisation, cette roue 15 est graduée en température : chaque chiffre de température s'affichant dans une lucarne 18 ménagée dans la contre-plaque 13.

Selon un autre exemple de réalisation, cette roue 15 est munie d'une bande de deux couleurs, l'une s'élargissant au fur et à mesure que la température de l'eau mitigée augmente, et l'autre s'élargissant au fur et à mesure que la température diminue. L'utilisateur, par la lucarne 18, peut ainsi apprécier la température de l'eau mitigée en fonction du rapport entre les deux couleurs de la bande. Cette bande peut comporter plus de deux couleurs, chacune correspondant à une plage de température.

L'utilisateur en agissant sur l'un ou l'autre des boutons-poussoirs commandera donc une augmentation ou une diminution de la température de l'eau mitigée d'une quantité déterminée : par exemple, 1°C par poussée. Ainsi l'utilisateur peut-il visualiser de manière non équivoque la température de l'eau mitigée et la régler pas à pas sans risquer d'obtenir une eau mitigée trop chaude avec risque de brûlure ou trop froide.

## Revendications

1. Robinet mitigeur à incrémentation du genre comportant notamment un corps cylindrique (1) dans lequel est insérée une cartouche thermostatique (2), qui est relié, d'une part, à une arrivée d'eau froide (3) et à une arrivée d'eau chaude (4) et, d'autre part, à une sortie d'eau mitigée (5), et qui comporte une commande pour régler le débit de sortie et une commande pour contrôler la température de l'eau mitigée, **caractérisé par le fait que** la commande pour régler la température de l'eau mitigée est reliée à une extrémité de la cartouche thermostatique (2) et comporte un dispositif d'incrémentation comprenant :
- une bague (8) montée en rotation sur l'axe de la cartouche thermostatique (2) et comportant à sa périphérie deux cercles de denture (8a et 8b),
- deux doigts pousseurs (9a et 9b) coopérant chacun avec un cercle de denture (8a, 8b) afin de faire tourner ladite bague (8) dans l'un ou l'autre sens, et
- des moyens (11) pour actionner chaque doigt pousseur (9a, 9b).

2. Robinet selon la revendication 1, **caractérisé par le fait qu'**il comprend une plaque (6) munie d'un berceau (7) sur lequel le corps cylindrique (1) est maintenu en position par tout moyen connu.

3. Robinet selon la revendication 1, **caractérisé par le fait que** chaque cercle de denture (8a, 8b) comporte une butée pour arrêter la rotation de la bague dans chaque sens.

4. Robinet selon la revendication 3, **caractérisé par le fait que**, chaque butée est constituée par une portion non dentée sur le cercle de denture correspondant.

5. Robinet selon la revendication 1, **caractérisé par le fait que** chaque doigt pousseur (9a, 9b) se déplace à l'intérieur d'un guide (10a, 10b) ménagé dans la plaque (6).

6. Robinet selon la revendication 1, **caractérisé par le fait que** le moyen (11) pour actionner chaque doigt (9a, 9b) est constitué par un bouton poussoir (11 a, 11 b) disposé à une extrémité du doigt correspondant (9a ou 9b) dont l'autre extrémité coopère avec le cercle de denture correspondant (8a ou 8b).

7. Robinet selon les revendications 2, **caractérisé par le fait que** la plaque est rendue solidaire d'une contre-plaque au travers de laquelle se déplacent les boutons-poussoirs (11 a, 11 b) afin d'en permettre l'actionnement par un utilisateur.

8. Robinet selon l'une quelconque des revendications 1 à 7, **caractérisé par le fait qu'**il comprend aussi un dispositif (14) pour visualiser la température de l'eau mitigée.

9. Robinet selon la revendication 8, **caractérisé par le fait que** le dispositif (14) pour visualiser la température de l'eau mitigée comporte une roue (15) engrenée par l'axe de la cartouche thermostatique (2) et sur le pourtour de laquelle est disposée une échelle de température, chaque chiffre s'affichant dans une lucarne (18) ménagée dans la contre-plaque (13).

10. Robinet selon la revendication 8, **caractérisé par le fait que** le dispositif (14) pour visualiser la température de l'eau mitigée comporte une roue (15) qui est engrenée par l'axe de la cartouche thermostatique (2) et dont le pourtour comporte une bande d'au moins deux couleurs.

11. Robinet selon la revendication 9, **caractérisé par le fait que** le pourtour de la roue (15) comporte deux bandes de couleur, l'une s'élargissant au fur et à mesure que la température de l'eau mitigée augmente, et l'autre s'élargissant au fur et à mesure que la température diminue.

## Patentansprüche

1. Mischbatterie mit Inkrementierung in der Art umfassend einen zylindrischen Körper (1), in den eine thermostatische Kartusche integriert ist, die zum Einen mit einem Kaltwasserzulauf (3) und einem Warmwasserzulauf (4) und zum Anderen mit einem Mischwasserauslass (5) verbunden ist, weiterhin umfassend ein Steuerelement, um die Ausflussmenge zu regeln und ein Steuerelement, um die Temperatur des Mischwassers zu regeln, **dadurch gekennzeichnet, dass** das Steuerelement zur Regelung der Temperatur des Mischwassers mit einem Endabschnitt der thermostatischen Kartusche (2) verbunden ist und eine Inkrementierungsvorrichtung umfasst, welche umfasst:
- einen auf der Achse der thermostatischen Kartusche drehbar angebrachter Ring (8), welcher im Randbereich zwei Zahnkränze (8a und 8b) umfasst;
- zwei schiebende Stifte (9a und 9b), die mit einem Zahnkranz (8a, 8b) zusammenwirken, um den Ring (8) in die eine oder andere Richtung zu drehen, und
- Mittel (11), um jeden schiebenden Stift (9a, 9b) zu bewegen.

2. Mischbatterie gemäß Anspruch 1, **dadurch gekennzeichnet, dass** er eine Platte(6) ausgestattet mit einem Bogenteil (7), auf dem der zylindrische Korpus (1) mit allen bekannten Möglichkeiten in Position gehalten wird, umfasst.

3. Mischbatterie gemäß Anspruch 1, **dadurch gekennzeichnet, dass** jeder Zahnkranz (8a, 8b) einen Anschlag umfasst, um die Drehung des Rings in jede Richtung anzuhalten.

4. Mischbatterie gemäß Anspruch 3, **dadurch gekennzeichnet, dass** der Anschlag durch einen nicht verzahnten Teil auf dem entsprechenden Zahnkranz gebildet ist.

5. Mischbatterie gemäß Anspruch 1, **dadurch gekennzeichnet, dass** ein jeder schiebende Stift (9a, 9b) sich im Inneren einer in der Platte angeordneten Führungsvorrichtung (10a, 10b) bewegt.

6. Mischbatterie gemäß Anspruch 1, **dadurch gekennzeichnet, dass** das Mittel (11) zum Antreiben eines jeden Stiftes (9a, 9b) durch einen Taster (11a, 11b) gebildet ist, welcher an einem Endabschnitt des jeweiligen Stiftes (9a oder 9b), dessen anderer Endabschnitt mit dem jeweiligen Zahnkranz (8a oder 8b) zusammenwirkt, angeordnet ist.

7. Mischbatterie gemäß Anspruch 2, **dadurch gekennzeichnet dass** die Platte fest mit einer Gegenplatte verbunden ist, durch die hindurch sich die Taster (11a, 11b) bewegen, um den Antrieb durch einen Benutzer zu ermöglichen.

8. Mischbatterie gemäß einem der Ansprüche 1 bis 7, **dadurch gekennzeichnet, dass** diese auch eine Vorrichtung (14) zur Temperaturanzeige des gemischten Wassers umfasst.

9. Mischbatterie gemäß Anspruch 8, **dadurch gekennzeichnet, dass** die Vorrichtung (14) zur Temperaturanzeige des gemischten Wassers ein Rad (15), eingreifend in die Achse der thermostatischen Kartusche (2), umfasst und an dessen Umfangsfläche eine Temperaturskala angeordnet ist, wobei jede Zahl in einer in der Gegenplatte (13) eingebrachten Aussparung (18) angezeigt wird.

10. Mischbatterie gemäß Anspruch 8, **dadurch gekennzeichnet, dass** die Vorrichtung (14) zur Temperaturanzeige des gemischten Wassers ein Rad (15), eingreifend in die Achse der thermostatischen Kartusche (2), umfasst und dessen Umfangsfläche ein Band mit mindestens zwei Farben umfasst.

11. Mischbatterie gemäß Anspruch 9, **dadurch gekennzeichnet, dass** die Umfangsfläche des Rads (15) mindestens zwei Farbbänder umfasst, wobei das eine sich mit Anstieg der Temperatur des gemischten Wassers und das andere mit Abfall der Temperatur weitet.

## Claims

1. An incremental mixer tap of the kind comprising a cylindrical body (1) into which is inserted a thermostatic cartridge (2) that is connected, firstly, to a cold water inlet (3) and to a hot water inlet (4) and, secondly, to a mixed water outlet (5), and that includes a control to adjust the outflow and a control to monitor the temperature of the mixed water, **characterized in that** the control to adjust the temperature of the mixed water is connected to one end of the thermostatic cartridge (2) and includes an incrementer comprising:
- a ring (8) mounted in rotation on the axis of the thermostatic cartridge (2) and including two tooth rings (8a and 8b) on its edge;
- two levers (9a and 9b) each cooperating with a tooth ring (8a, 8b) so as to cause the said ring (8) to turn in one direction or the other; and
- means (11) to operate each lever (9a, 9b).

2. A tap according to claim 1, **characterized in that** it includes a plate (6) equipped with a cradle (7) on which the cylindrical body (1) is held in position by any known means.

3. A tap according to claim 1, **characterized in that** each tooth ring (8a, 8b) includes a thrust bearing to stop the rotation of the ring in each direction.

4. A tap according to claim 3, **characterized in that** each thrust bearing consists of a toothless portion on the corresponding ring.

5. A tap according to claim 1, **characterized in that** each lever (9a, 9b) moves within a bracket (10a, 10b) housed in the plate (6).

6. A tap according to claim 1, **characterized in that** the means (11) of working each lever (9a, 9b) consists of a push-button (11 a, 11 b) placed at one end of the corresponding lever (9a or 9b) whose other end cooperates with the corresponding tooth ring (8a or 8b).

7. A tap according to claim 2, **characterized in that** the plate becomes embedded in a counterplate through which the push-buttons move (11 a, 11 b) so as to allow the user to operate them.

8. A tap according to any of claims 1 to 7, **characterized in that** it also includes a mechanism (14) for viewing the temperature of the mixed water.

9. A tap according to claim 8, **characterized in that** the mechanism (14) for viewing the temperature of the mixed water comprises a wheel (15) engaged by the axis of the thermostatic cartridge (2) on the periphery of which a temperature scale is arranged, each figure being displayed in a window (18) housed within the counterplate (13).

10. A tap according to claim 8, **characterized in that** the mechanism (14) for viewing the temperature of the mixed water includes a wheel (15) that is engaged by the axis of the thermostatic cartridge (2) whose periphery includes a band of at least two colours.

11. A tap according to claim 9, **characterized in that** the periphery of the wheel (15) includes two coloured bands, one expanding as the temperature of the mixed water rises and the other expanding as the temperature falls.
